# FASCICULE DE BREVET EUROPEEN

(11) **EP 1 057 242 B1**
(45) Date de publication et mention de la délivrance du brevet: **08.06.2011**
(21) Numéro de dépôt: 99961101.5
(22) Date de dépôt: 17.12.1999
(51) Int. Cl.: H02K 19/10, H02K 1/27

(54) **MACHINE ELECTRIQUE TOURNANTE A AIMANTS PERMANENTS ET A RELUCTANCE POSSEDANT UNE CONSTRUCTION PERFECTIONNEE**
ELEKTRISCHE ROTATIONSMASCHINE MIT PERMANENTMAGNETEN UND RELUKTANZ MIT VERBESSERTER KONSTRUKTION
ROTATING ELECTRIC MACHINE WITH PERMANENT MAGNETS AND MAGNETIC RESISTANCE HAVING AN IMPROVED STRUCTURE

(30) Priorité: 18.12.1998 FR 9816183
(43) Date de publication de la demande: 06.12.2000
(73) Titulaire: VALEO EQUIPEMENTS ELECTRIQUES MOTEUR, 94000 Créteil (FR)
(72) Inventeur: AKEMAKOU, Dokou, Antoine, F-94400 Vitry-sur-Seine (FR)
(86) Numéro de dépôt international: PCT/FR1999/003181
(87) Numéro de publication internationale: WO 2000/038301

(56) Documents cités:
- EP-A1- 0 741 444
- WO-A1-96/30992
- US-A- 4 486 678
- BINNS ET AL.: "Use of canned rotors in high-field permanent magnet machines" IEE PROCEEDINGS-B, vol. 139, no. 5, septembre 1992 (1992-09), pages 471-477, XP000320155 Stevenage, GB
- XU ET AL.: "A New Design Concept of Permanent Magnet Machine for Flux Weakening Operation" IEEE INDUSTRY APPLICATIONS CONFERENCE, vol. I, 3 - 8 octobre 1993, pages 3-8, XP000427426 Toronto, CDN

## Description

La présente invention concerne d'une façon générale les machines électriques tournantes, et en particulier une machine tournante synchrone possédant un rotor à aimants permanents.

On connaît déjà par le document « Comparaison of different synchronous motor drives for flux weakening applications », N. Bianchi et al., Compte-Rendu de International Conference on Electrical Machines (ICEM), Instanbul, Turquie, Septembre 1998, volume 2/3, pages 946 et suivantes, et en particulier par la figure 5 de ce document et la description associée, une machine dont le rotor est séparé en deux parties coaxiales placées bout à bout en direction axiale.

Une première partie du rotor constitue un rotor à aimants d'excitation, tandis que l'autre partie constitue un rotor à réluctance variable.

Alors qu'une telle machine présente des propriétés intéressantes notamment en termes de défluxage lorsque la machine doit fonctionner dans des conditions de charge réduites, un inconvénient majeur réside en ce qu'il est nécessaire de prévoir pour la construction du rotor deux types de carcasses, à savoir une carcasse spécifique pour la partie de rotor à aimants permanents et une carcasse spécifique pour la partie de rotor à réluctance variable.

La présente invention a pour premier objet de pallier cet inconvénient et de permettre la réalisation d'un rotor opérant selon ce même principe à l'aide d'une carcasse unique.

Plus précisément, la présente invention se propose de combiner les deux parties de rotor dans un rotor unique, dont la carcasse puisse ainsi être réalisée avec un motif de tôle découpée unique.

Ainsi la présente invention propose une machine électrique tournante telle que définie dans la revendication 1.

Des aspects préférés, mais non limitatif, de la machine tournante de la présente invention sont les suivants:
- la machine possède un nombre identique de parties polaires à aimant(s) permanent(s) et de parties polaires à réluctance, disposées en alternance.
- la machine possède un nombre différent de parties polaires à aimant(s) permanent(s) et de parties polaires à réluctance, avec au moins une succession d'au moins deux parties polaires de même type.
- chaque partie polaire à aimant(s) permanent(s) comprend deux aimants à flux essentiellement radial disposés à proximité de la périphérie du rotor.
- les aimants sont surfaciques.
- les aimants sont enterrés.
- les pôles du rotor sont définis par des griffes imbriquées appartenant à deux parties de rotor.
- chaque partie polaire à aimant(s) permanent(s) comprend un aimant à flux essentiellement tangentiel disposé dans une encoche formée entre deux régions de ladite partie polaire qui définissent ses pôles.
- les parties polaires à aimant(s) permanent(s) et les parties polaires à réluctance appartiennent à une carcasse unique.
- chaque partie polaire à réluctance possède des aménagements de canalisation de flux magnétique entre ses deux pôles.
- chaque partie polaire à réluctance possède au moins un aimant auxiliaire enterré de canalisation de flux magnétique.

D'autres aspects, buts et avantages de la présente invention apparaîtront mieux à la lecture de la description détaillée suivante de diverses formes de réalisation de celle-ci, donnée à titre d'exemple non limitatif et faite en référence aux dessins annexés, sur lesquels :
la figure 1 est une vue schématique en coupe transversale d'une machine tournante selon une première forme de réalisation de l'invention,
la figure 2 est une vue schématique en coupe transversale d'une machine tournante selon une deuxième forme de réalisation de l'invention, et
la figure 3 est une vue schématique en coupe transversale d'une machine tournante selon une troisième forme de réalisation de l'invention.

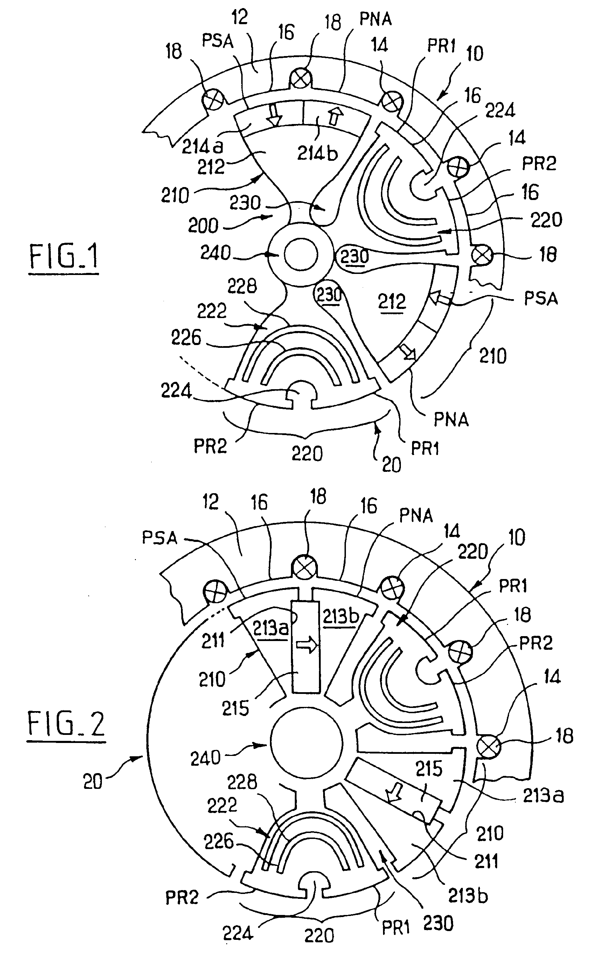

En référence tout d'abord à la figure 1, on a représenté schématiquement une machine tournante qui comprend un stator annulaire externe 10 de construction classique, dont la carcasse 12 définit une pluralité d'encoches 14 délimitées deux à deux par des dents 16 formant pôles. Les encoches 14 abritent des bobinages d'induit 18 en l'espèce monophasés. Un stator polyphasé à bobinages répartis, avec ou sans raccourcissement du pas de bobinage, est bien entendu également envisageable, notamment.

Le rotor 20 est réalisé de préférence par empilage de tôles, et comprend des secteurs à aimants permanents alternés, dans la direction circonférentielle, avec des secteurs à réluctance. ces secteurs sont réalisés de préférence à partir de tôles empilées communes formant une carcasse commune 200.

Dans cette forme de réalisation, le rotor comprend des secteurs 210 à aimants permanents en alternance avec des secteurs 220 à réluctance, chaque secteur définissant deux pôles du rotor. Plus précisément, chaque secteur 210 illustré sur la figure 1 possède une partie de carcasse 212 et deux aimants 214a, 214b montés à la surface périphérique du rotor, dans des sens opposés. Les deux aimants définissant ainsi, au niveau de ce secteur, un pôle Sud à aimant PSA et un pôle Nord à aimant PNA.

En outre, chaque secteur 220 possède une partie de carcasse 222 qui définit en périphérie une encoche 224 laissée vide, de manière à définir deux pôles à réluctance PR1 et PR2, ainsi que deux fentes incurvées 226 et 228 s'étendent le long l'une de l'autre de manière à définir une trajectoire privilégiée pour un champ magnétique, dans un sens ou dans l'autre, entre les pôles PR1 et PR2.

On peut également prévoir dans les secteurs 220 des aimants auxiliaires enterrés de faible épaisseur (non représentés), destinés à canaliser le flux, et en particulier à assister et à aiguiller le flux magnétique engendré par les secteurs à aimants permanents sans dégrader le comportement en défluxage.

Les secteurs 210 et 220 sont séparés deux à deux par des vides ou encoches profondes 230 s'étendant à partir de la périphérie du rotor, et se rejoignent au niveau d'un noyau central 240 de la carcasse 200 par lequel sensiblement aucun flux ne peut passer.

Les secteurs 210 et 220 s'alternent ainsi à la périphérie du rotor, pour ainsi définir en succession sur cette périphérie des paires de pôles à aimants PNA et PSA de polarités imposées par lesdits aimants, et des paires de pôles à réluctance PR1 et PR2 sont la polarité n'est pas fixée.

En particulier, lorsque la machine opère dans des conditions de fonctionnement normales, on observe sur le rotor une succession de pôles alternés Sud et Nord, à savoir un pôle PSA, un pôle PNA, un pôle PR1 adoptant du fait de la propagation du flux magnétique dans le secteur 220, une polarité Sud, et un pôle PR2 adoptant de ce fait la polarité Nord, et ainsi de suite.

Lorsqu'en revanche la machine opère dans des conditions de défluxage, les secteurs 220 autorisent alors une propagation du champ magnétique dans le sens inverse, du fait du phénomène classique d'avance du courant sur la force contre-électromotrice, ce qui correspond à une succession d'un pôle Sud PSA, d'un pôle Nord PNA, d'un pôle Nord PR1 et d'un pôle Sud PR2.

On réalise donc, une machine à aimants et à réluctance avec un rotor présentant une structure homogène sur toute son étendue axiale.

Selon une variante de réalisation, non illustrée, on peut prévoir de disposer les aimants 214a, 214b de façon enterrée dans chaque secteur associé 210, à une faible distance prédéterminée au-dessous de la surface périphérique du rotor.

En référence maintenant à la figure 2, on a illustré une machine tournante similaire à celle de la figure 1, dans laquelle les secteurs à aimants permanents sont toutefois modifiés pour réaliser leurs pôles Sud et Nord à l'aide d'un aimant unique 215 à flux tangential.

Ainsi la figure 2 montre que chaque secteur 210 possède centralement une encoche 211 délimitée par deux parties de carcasse 213a et 213b, un aimant 215 étant logé dans ladite encoche 211 pour définir un pôle Sud PSA au niveau de la partie 213a et un pôle Nord PNA au niveau de la partie 213b.

Pour le reste, cette machine est identique à celle de la figure 1. On notera que cette forme de réalisation permet de bénéficier du même principe de fonctionnement avec un nombre d'aimants divisé par deux.

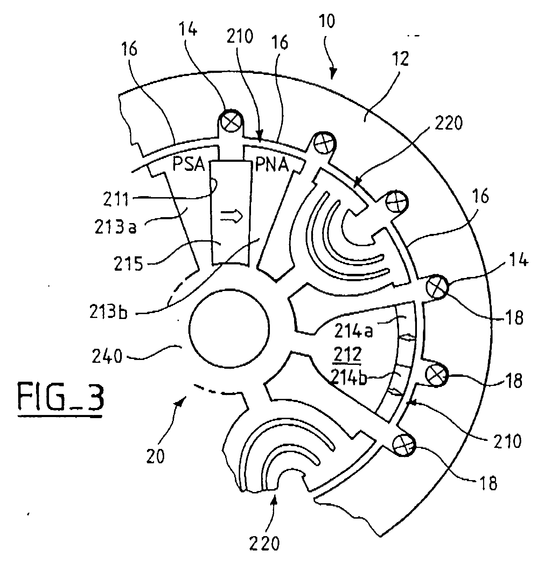

La figure 3 combine quant à elle les formes de réalisation des figures 1 et 2 avec, en alternance, un secteur à aimants 210 réalisé conformément à la figure 1, un secteur 220 à réluctance, un secteur à aimant 210 réalisé conformément à la figure 2, un secteur 220 à réluctance, et ainsi de suite.

Bien entendu, la présente invention n'est nullement limitée aux formes de réalisation décrites et représentées, mais l'homme du métier saura y apporter toute variante ou modification conforme à son esprit.

En particulier, en fonction de la capacité de défluxage souhaitée, on peut jouer sur la proportion entre les secteurs à pôles aimantés et les secteurs à pôles à réluctance, et par exemple prévoir un secteur à deux pôles aimantés Sud et Nord, un second secteur identique à pôles aimantés Sud et Nord, un secteurs à deux pôles à réluctance, puis à nouveau deux secteurs à deux pôles aimantés chacun, etc.

Ceci correspond en quelque sorte, par comparaison à la machine décrite dans l'article cité en introduction, à jouer sur la répartition entre les longueurs axiales de la partie de rotor à aimants et de la partie de rotor à réluctance de cette machine connue.

La présente invention s'applique notamment aux alternateurs et alterno-démarreurs de véhicules automobiles.

## Revendications

1. Machine électrique tournante, notamment un alternateur ou un alterno-démarreur de véhicule automobile, comprenant un stator (10) équipé de bobinages d'induit (18) et un rotor (20) monté rotatif à l'intérieur du stator, le rotor possédant une partie de rotor (210) à aimant(s) permanent(s) et une partie de rotor à réluctance (220), **caractérisée en ce que** le rotor est sensiblement uniforme sur son étendue axiale et possède suivant sa direction tangentielle une répartition de parties polaires (212, 214a, 214b ; 211, 213a, 213b, 215) à aimant permanent (214a, 214b ; 215) définissant chacune deux pôles (PSA, PNA) de polarités imposées par aimant, et de parties polaires à réluctance (222) définissant chacune deux pôles (PR1, PR2) de polarités libre, lesdites parties polaires à réluctance (222) comportant chacune une encoche (224) laissée vide et définissant lesdits deux pôles (PR1, PR2) de polarités libres.

2. Machine selon la revendication 1, **caractérisée en ce que** chaque partie polaire à réluctance (222) possède des aménagements (224, 226, 228) de canalisation de flux magnétique entre ses deux pôles (PR1, PR2).

3. Machine selon la revendication 1 ou 2, **caractérisée en ce qu'**elle possède un nombre identique de parties polaires (212, 214a, 214b ; 211, 213a, 213b, 215) à aimant(s) permanent(s) et de parties polaires à réluctance (222), disposées en alternance.

4. Machine selon la revendication 1 ou 2, **caractérisée en ce qu'**elle possède un nombre différent de parties polaires (212, 214a, 214b ; 211, 213a, 213b, 215) à aimante(s) permanent(s) et de parties polaires (222) à réluctance, avec au moins une succession d'au moins deux parties polaires de même type.

5. Machine selon l'une des revendications 1 à 4, **caractérisée en ce que** chaque partie polaire (212, 214a, 214b) à aimant(s) permanent(s) comprend deux aimants (214a, 214b) à flux essentiellement radial disposés à proximité de la périphérie du rotor.

6. Machine selon la revendication 5, **caractérisée en ce que** les aimants (214a, 214b) sont surfaciques.

7. Machine selon la revendication 5, **caractérisée en ce que** les aimants (214a, 214b) sont enterrés.

8. Machine selon l'une des revendications 1 à 4, **caractérisée en ce que** chaque partie polaire à aimant permanent comprend un aimant (215) à flux essentiellement tangentiel disposé dans une encoche (211) formée entre deux régions (213a, 213b) de ladite partie polaire qui définissent ses pôles (PSA, PNA).

9. Machine selon l'une des revendications 1 à 7 et 8, **caractérisée en ce que** les parties polaires à aimant permanent et les parties polaires à réluctance appartiennent à une carcasse unique (212, 222, 240 ; 213a, 213b, 222, 240).

10. Machine selon l'une des revendications 1 à 9, **caractérisée en ce que** chaque partie polaire à réluctance (222) possède au moins un aimant auxiliaire enterré de canalisation de flux magnétique.

## Claims

1. Rotary electrical machine, in particular an alternator or combined alternator/starter motor for automobile vehicles, comprising a stator (10) equipped with stator windings (18) and a rotor (2 0) mounted to rotate inside the stator, the rotor having a permanent magnet rotor part (210) and a variable reluctance rotor part (220), **characterized in that** the rotor is substantially uniform throughout its axial length and has in its tangential direction a distribution of permanent magnet pole parts (212, 214a, 214b; 211, 213a, 215) with a permanent magnet (214a, 214b; 215) each defining two poles (PSA, PNA) whose polarity is imposed by a magnet and variable reluctance pole parts (222) each defining two poles (PR1, PR2) whose polarity is not imposed, said variable reluctance pole parts (222) each comprising a notch (224) left empty and defining said two poles (PR1, PR2) whose polarity is not imposed.

2. Machine according to Claim 1, **characterized in that** each variable reluctance pole part (222) has arrangements (224, 226, 228) for channelling magnetic flux between its two poles (PR1, PR2).

3. Machine according to Claim 1 or 2, **characterized in that** it has the same number of permanent magnet pole parts (212, 214a, 214b; 211, 213a, 213b, 215) and variable reluctance pole parts (222), disposed alternately.

4. Machine according to Claim 1 or 2, **characterized in that** it has different numbers of permanent magnet pole parts (212, 214a, 214b; 211, 213a, 213b, 215) and variable reluctance pole parts (222), with at least one succession of at least two pole parts of the same type.

5. Machine according to any of Claims 1 to 4, **characterized in that** each permanent magnet pole part (212, 214a, 214b) comprises two magnets (214a, 214b) whose flux is essentially radial and which are disposed in the vicinity of the periphery of the rotor.

6. Machine according to Claim 5, **characterized in that** the magnets (214a, 214b) are on the surface.

7. Machine according to Claim 5, **characterized in that** the magnets (214a, 214b) are buried.

8. Machine according to any of Claims 1 to 4, **characterized in that** each permanent magnet pole part comprises a magnet (215) whose flux is essentially tangential disposed in a notch (211) formed between two regions (213a, 213b) of said pole part which define its poles (PSA, PNA).

9. Machine according to any of Claims 1 to 7 and 8, **characterized in that** the permanent magnet pole parts and the variable reluctance pole parts are portions of a single yoke (212, 222, 240; 213a, 213b, 222, 240).

10. Machine according to any of Claims 1 to 9, **characterized in that** each variable reluctance pole part (222) has at least one buried auxiliary magnet for channeling magnetic flux.

## Patentansprüche

1. Drehende elektrische Maschine, insbesondere Wechselstromgenerator oder Starter-Generator für Kraftfahrzeug, die einen Stator (10), der mit Induktionswicklungen (18) ausgerüstet ist, und einen Rotor (20), der innerhalb des Stators drehbar montiert ist, umfasst, wobei der Rotor einen Rotorabschnitt (210) mit einem oder mehreren Permanentmagneten sowie einen Reluktanz-Rotorabschnitt (220) besitzt, **dadurch gekennzeichnet, dass** der Rotor auf seiner axialen Länge im Wesentlichen gleichmäßig ist und in seiner tangentialen Richtung eine Verteilung von Polteilen (212, 214a, 214b; 211, 213a, 213b, 215) mit Permanentmagnet (214a, 214b; 215), die jeweils zwei Pole (PSA, PNA) mit aufgeprägten Polaritäten pro Magnet definieren, und von Reluktanz-Polteilen (222), die jeweils zwei Pole (PR1, PR2) mit freien Polaritäten definieren, besitzt, wobei die Reluktanz-Polteile (222) jeweils eine freigelassene Kerbe (224) aufweisen und die zwei Pole (PR1, PR2) mit freien Polaritäten definieren.

2. Maschine nach Anspruch 1, **dadurch gekennzeichnet, dass** jeder Reluktanz-Polteil (222) Einrichtungen (224, 226, 228) für die Leitung des magnetischen Flusses zwischen seinen zwei Polen (PR1, PR2) besitzt.

3. Maschine nach Anspruch 1 oder 2, **dadurch gekennzeichnet, dass** sie die gleiche Anzahl von Polteilen (212, 214a, 214b; 211, 213a, 213b, 215) mit einem oder mehreren Permanentmagneten und von Reluktanz-Polteilen (222), die abwechselnd angeordnet sind, besitzt.

4. Maschine nach Anspruch 1 oder 2, **dadurch gekennzeichnet, dass** sie eine unterschiedliche Anzahl von Polteilen (212, 214a, 214b; 211, 213a, 213b, 215) mit einem oder mehreren Permanentmagneten und von Reluktanz-Polteilen (222) mit wenigstens einer Folge aus wenigstens zwei Polteilen desselben Typs besitzt.

5. Maschine nach einem der Ansprüche 1 bis 4, **dadurch gekennzeichnet, dass** jeder Polteil (212, 214a, 214b) mit einem oder mehreren Permanentmagneten zwei Magneten (214a, 214b) mit im Wesentlichen radialem Fluss, die in der Nähe des Umfangs des Rotors angeordnet sind, umfasst.

6. Maschine nach Anspruch 5, **dadurch gekennzeichnet, dass** die Magneten (214a, 214b) an der Oberfläche vorhanden sind.

7. Maschine nach Anspruch 5, **dadurch gekennzeichnet, dass** die Magneten (214a, 214b) unter der Oberfläche vorhanden sind.

8. Maschine nach einem der Ansprüche 1 bis 4, **dadurch gekennzeichnet, dass** jeder Polteil mit Permanentmagnet einen Magneten (215) mit im Wesentlichem tangentialem Fluss umfasst, der in einer Kerbe (211) angeordnet ist, die zwischen zwei Bereichen (213a, 213b) des Polteils, die seine Pole (PSA, PNA) definieren, gebildet ist.

9. Maschine nach einem der Ansprüche 1 bis 7 und 8, **dadurch gekennzeichnet, dass** die Polteile mit Permanentmagnet und die Reluktanz-Polteile zu einem einzigen Polgehäuse (212, 222, 240; 213a, 213b, 222, 240) gehören.

10. Maschine nach einem der Ansprüche 1 bis 9, **dadurch gekennzeichnet, dass** jeder Reluktanz-Polteil (222) wenigstens einen unter der Oberfläche vorhandenen Hilfsmagneten für die Leitung des magnetischen Flusses besitzt.
